# EUROPEAN PATENT SPECIFICATION

(11) **EP 2 591 988 B1**
(45) Date of publication and mention of the grant of the patent: **19.04.2017**
(21) Application number: 12187388.9
(22) Date of filing: 05.10.2012
(51) Int. Cl.: B62D 33/06, B62D 25/16

(54) **Tractor cabs**
Traktorkabinen
Cabines de tracteur

(30) Priority: 09.11.2011 GB 201119308
(43) Date of publication of application: 15.05.2013
(73) Proprietor: Valtra Oy Ab, 44201 Suolahti (FI)
(72) Inventor: Toukola, Jukka, FI-40420 Jyska (FI)
(74) Representative: AGCO Intellectual Property Department

(56) References cited:
- EP-A1- 0 686 544
- EP-A1- 2 548 752
- EP-A2- 1 288 114
- GB-A- 2 469 649
- US-A- 3 712 664
- US-A1- 2008 276 443

## Description

This invention relates to cabs for use on agricultural or industrial tractors.

Conventionally such cabs have a basic roll-over protection structure (ROPS) which protects the tractor driver should the tractor turn over and this ROPS is clad in body panels and glass to complete the cab. The construction of such cabs is often complex involving the use of many body panels which are welded or otherwise secured to the ROPS.

EP 1288114, which discloses the preamble of claim 1, a moulded plastic floor and fender structure for a utility vehicle, having top and bottom layers of RIM material, which may be connected with a steel frame.

It is an object of the present invention to provide an improved form of tractor cab which is cheaper and easier to produce.

Thus in accordance with present invention a tractor cab is provided which has a wall portion formed as a double skinned plastics moulding, as described in claim 1.

The cab has a tubular ROPS on which the double skinned plastics wall portion is secured.

The wall portion is particularly suitable for the formation of the wheel arch and fender areas of the cab.

The plastics wall portion has inner and outer skins, the inner skin forming the finished inside surface of that region of the cab.

The plastics moulding includes channels for receiving part of the tubular cab ROPS.

The inner skin may be moulded with formations which form storage receptacles or boxes or mounts for instrumentation, displays or controls.

The inner skin may be provided with integrally formed trim material or a separate trim panel may be applied over the inner skin.

The inner skin may be provided with integrally formed trim material or a separate trim panel may be applied over the inner skin.

If the plastics wall portion is used to form the wheel arch and fender portions of the cab the rear portion of the moulding may include recesses to receive cab lights or control buttons etc.

Preferably the moulded wall portion is formed from polyethene material which may be reinforced by glass, carbon and/or other fibres.

One embodiment of the present invention will now be described, by way of example only, with reference to the accompanying drawings in which:
Figure 1 shows a perspective view of the wheel arch and fender area of a tractor cab in accordance with the present invention;
Figure 2 shows a sectional view on the plane X-X of Figure 1, and

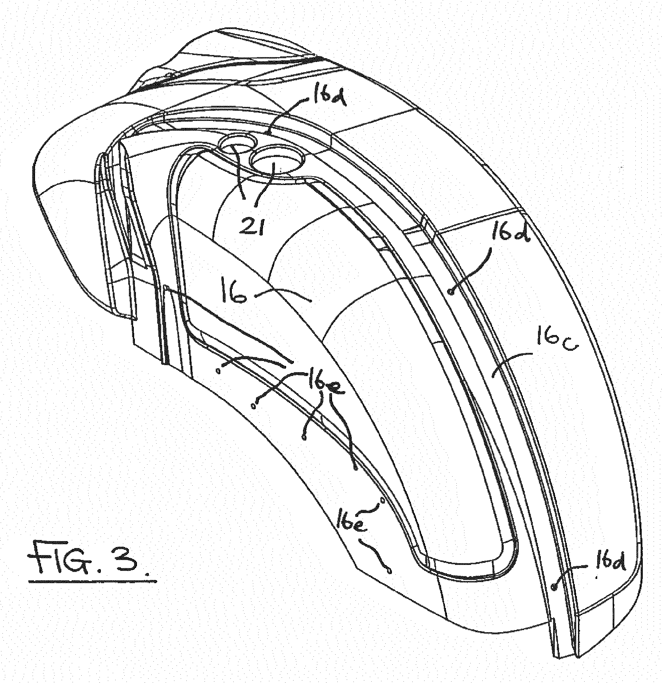

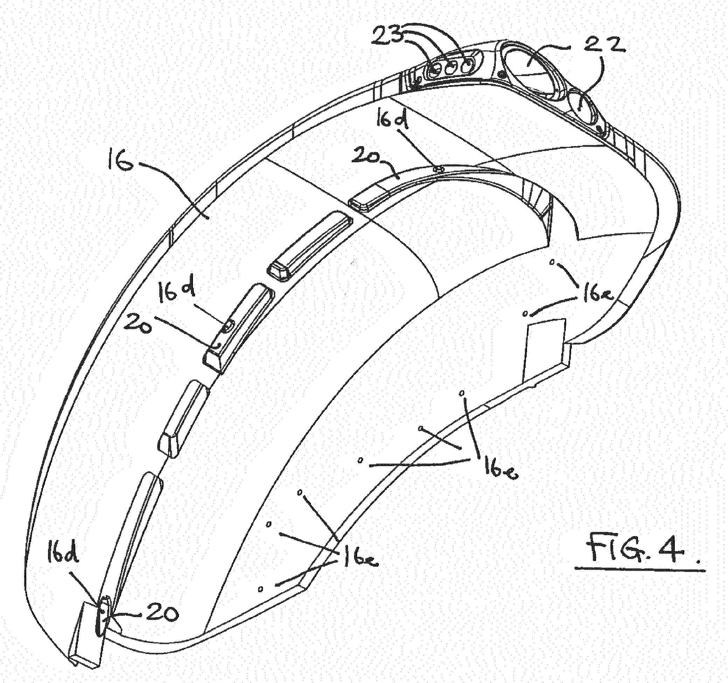

Figures 3 and 4 show perspective views from above and below the double walled plastics wheel arch/fender portion of the cab.

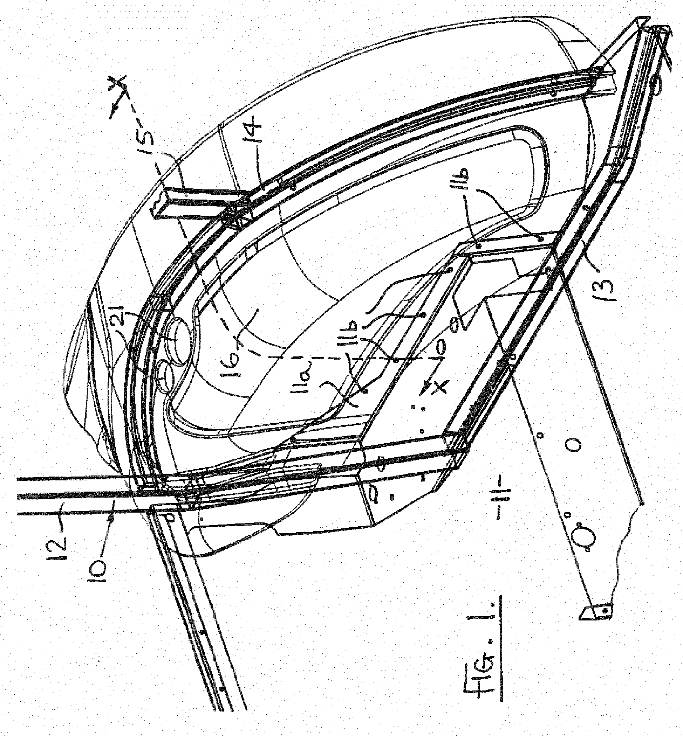

Referring to the drawings, the tractor cab has a ROPS 10 part of which is shown in Figure 1. As is conventional, the ROPS includes the cab floor 11, corner posts 12 and lower rails 13 from which the cab is mounted on the remainder of the tractor. An intermediate rail 14 is also provided which not only supports secondary roof support posts 15 but also supports a cab wall portion in the form of a rear wheel arch and fender section 16 of the cab and a sealing surface for the door.

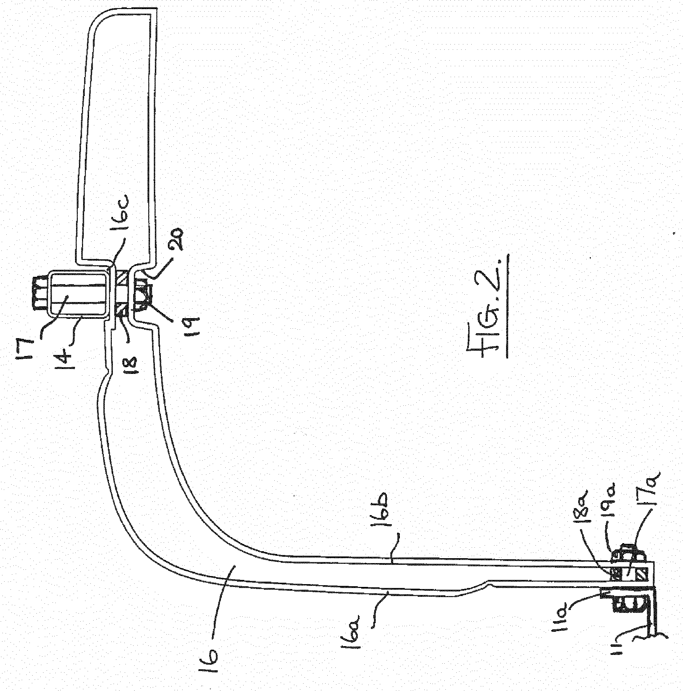

In accordance with the present invention this rear wheel arch and fender section 16 is manufactured as a double skinned plastics moulding manufactured from polyethene material. This double skinned construction is shown in Figure 2 from which it can be seen that the wall portion 16 has an inner skin 16a and an outer skin 16b.

The inner skin 16b is provided with a channel 16c which receives the intermediate rail 14 of the ROPS. The wall portion 16 is secured both to the intermediate rail 14 and also to a flange 11a formed along the edge of the floor 11 of the cab by bolts 17 which extending through holes 14a in the intermediate rail 14 and corresponding holes 16d in wall portion 16 and holes in flange 11 a and corresponding holes 16e in wall portion 16. As shown in Figure 2, spacers 18 may be used between the inner and outer skins 16a and 16b to prevent squashing of the double skinned wall portion 16 when bolts 17 are tightened. The spacers 18 can be integrally formed on the wall portion 16 or can be separate therefrom. Nuts 19 associated with bolts 17 are located in recesses 20 formed in the under surface of the wheel arch portion of wall portion 16. A similar fastening arrangement with bolts 17a, spacers 18a and nuts 19a is used to fasten the lower edge of the wall portion 16 to the flange 11 a.

The inner surface 16a of the wall portion 16 also includes recesses 21 to receive such items as drink cans etc it may also have integrally formed storage boxes or mounts for instrumentation, displays and controls.

Preferably the inside surface 16a of the wall portion 16 is finished so as to form the actual inside surface of the cab without the requirement of any additional trim panels etc. Alternatively, the inside surface could be covered with a detachable trim panel if this is desired.

The rear portion of the wall panel 16 may include a recess 22 for the rear lights/turn indicators etc of the tractor and recesses 23 for the provision of buttons to control such functions as the raising and lowering of a rear hitch of the tractor.

As will be appreciated, by providing the wall portion 16 as a double skinned plastics moulding the production costs of the cab are significantly lowered since the relatively complex shape of the wheel arch and fender portion of the cab is expensive to construct from metal componentry. Also the ability to integrally form the trim panels on the inner surface 16a of the wall portion 16 provides further economies in production. The fact that the wall portion 16 will not corrode is also a significant advantage.

In summary there is provided a tractor cab which has a wall portion formed as a double skinned polyethene plastics moulding. The cab also has a tubular ROPS on which the double skinned plastics wall portion is secured. The wall portion includes the wheel arch and fenders of the cab with inner and outer skins, the inner skin forming the finished inside surface of the region of the cab. The plastics moulding includes moulded channels for receiving part of the tubular cab ROPS. The ROPS is secured to the double skinned plastics moulding with spacers between the inner and outer skins at the points of securement to the ROPS. The inner skin includes moulded formations which form storage receptacles or boxes or mounts for instrumentation or controls and a rear portion of the moulding includes recesses to receive cab lights or control buttons.

## Claims

1. A tractor cab (10) having a wall portion (16) formed as a double skinned plastics moulding in which the plastics wall portion has inner and outer skins (16a, 16b), the inner skin (16a) forming the finished inside surface of the region of the cab, in which the cab has a tubular ROPS (12) on which the double skinned plastics wall portion (16) is secured, in which the plastics moulding includes moulded channels (16c) for receiving part of the tubular cab ROPS, **characterised in that** the ROPS is secured to the double skinned plastics moulding with spacers (18) between the inner and outer skins at the points of securement to the ROPS.

2. A cab according to Claim 1 in which the wall portion (16) includes the wheel arch and fenders of the cab.

3. A cab according to Claim 1 in which the inner skin (16a) includes moulded formations which form storage receptacles or boxes or mounts for instrumentation or controls.

4. A cab according to any one of Claims 1 to 3 in which a rear portion of the moulding includes recesses (22,23) to receive cab lights or control buttons.

5. A cab according to any one of Claims 1 to 4 in which the wall portion is moulded from polyethene material.

6. A cab according to any one of Claims 1 to 5 in which the spacers are integrally formed on the wall portion.

7. A cab according to any one of Claims 1 to 5 in which the spacers are formed separate from the wall portion.

## Patentansprüche

1. Traktorkabine (10) mit einem Wandbereich (16), der als doppelschaliges Kunststoffformteil ausgebildet ist, wobei der Kunststoffwandbereich eine innere und eine äußere Schale (16a, 16b) besitzt, wobei die innere Schale (16a) die fertige innere Oberfläche des Bereichs der Kabine bildet, wobei die Kabine einen rohrförmigen Überrollschutz (12) (Englisch: "Roll Over Protective Structure"; ROPS) besitzt, an dem der doppelschalige Kunststoffwandbereich (16) befestigt ist, wobei das Kunstformteil geformte Kanäle (16c) zum Aufnehmen eines Teils des rohrförmigen Kabinen-ROPS besitzt, **dadurch gekennzeichnet, dass** der ROPS durch Abstandshalter (18) zwischen der inneren und der äußeren Schale an der Stelle der Befestigung an dem ROPS an dem doppelschaligen Kunststoffformteil befestigt ist.

2. Kabine nach Anspruch 1, wobei der Wandbereich (16) den Radlauf und die Kotflügel der Kabine aufweist.

3. Kabine nach Anspruch 1, wobei die innere Schale (16a) geformte Ausbildungen aufweist, die Aufbewahrungsaufnahmen oder Kisten oder Befestigungen für Instrumente oder Regler bildet.

4. Kabine nach einem der Ansprüche 1 bis 3, wobei ein hinterer Bereich der Form Ausnehmungen (22, 23) aufweist, um Kabinenlichter oder Regelschalter aufzunehmen.

5. Kabine nach einem der Ansprüche 1 bis 4, wobei der Wandbereich aus einem Polyethylenmaterial geformt ist.

6. Kabine nach einem der Ansprüche 1 bis 5, wobei die Abstandshalter einstückig mit dem Wandbereich ausgebildet sind.

7. Kabine nach einem der Ansprüche 1 bis 5, wobei die Abstandshalter separat zu dem Wandbereich ausgebildet sind.

## Revendications

1. Cabine de tracteur (10) comportant une partie de paroi (16) formée en un moulage à double enveloppe en matière plastique dans lequel la partie de paroi en matière plastique comporte des enveloppes interne et externe (16a, 16b), l'enveloppe interne (16a) formant la surface interne finie de la zone de la cabine, dans laquelle la cabine comporte une structure tubulaire de protection contre le renversement (ROPS) (12) sur laquelle est fixée la partie de paroi à double enveloppe en matière plastique (16), dans laquelle le moulage en matière plastique comporte des canaux (16c) moulés afin de recevoir une partie du dispositif tubulaire ROPS de cabine, **caractérisée en ce que** le dispositif ROPS est fixé sur le moulage à double enveloppe en matière plastique avec des entretoises (18) entre les enveloppes interne et externe au niveau des points de fixation du dispositif ROPS.

2. Cabine selon la revendication 1, dans laquelle la partie de paroi (16) comporte le garde-boue et les ailes de la cabine.

3. Cabine selon la revendication 1, dans laquelle l'enveloppe interne (16a) comporte des empreintes moulées qui forment des réceptacles de stockage ou des boîtes ou des supports de montage destinés à de l'instrumentation ou des commandes.

4. Cabine selon l'une quelconque des revendications 1 à 3, dans laquelle une partie arrière du moulage comporte des cavités (22, 23) afin de recevoir des feux de cabine ou des boutons de commande.

5. Cabine selon l'une quelconque des revendications 1 à 4, dans laquelle la partie de paroi est moulée en un matériau à base de polyéthène.

6. Cabine selon l'une quelconque des revendications 1 à 5, dans laquelle les entretoises sont formées de manière unitaire sur la partie de paroi.

7. Cabine selon l'une quelconque des revendications 1 à 5, dans laquelle les entretoises sont formées séparément de la partie de paroi.
